# EUROPEAN PATENT APPLICATION

(11) **EP 4 660 894 A1**
(43) Date of publication of application: **10.12.2025**
(21) Application number: 25179071.3
(22) Date of filing: 27.05.2025
(51) Int. Cl.: G06N 5/04, G06N 20/00, G06Q 10/0633

(54) **FAILURE MODE ANALYSIS SUPPORT SYSTEM**

(30) Priority: 03.06.2024 JP 2024090307
(71) Applicant: Prime Planet Energy & Solutions, Inc., Chuo-ku, Tokyo 103-0022 (JP)
(72) Inventor: ASAKURA, Jun, Tokyo, 103-0022 (JP); ONIKI, Motoyuki, Tokyo, 103-0022 (JP)
(74) Representative: Kuhnen & Wacker Patent- und Rechtsanwaltsbüro PartG mbB

(57) **Abstract**

A failure mode analysis support method proposed herein is a computer-implemented failure mode analysis support method. The method includes: an input process (s1) of entering at least one piece of information that is subject to a failure mode analysis; and a process (sa) of asking a question to a conversational AI so that at least one failure mode that may occur in a product or a manufacturing process is answered based on the information having entered in the input process, to obtain an answer indicating the failure mode that may occur in the product or the manufacturing process.

## Description

### BACKGROUND

The present invention relates to a failure mode analysis support system.

JP 2005-293403 A discloses a design work support device that displays a business process template indicating a design work procedure on an operation screen panel, and supports offering of design information and accumulating design results according to the design work procedure shown in the business process template.

The design work support device includes a use history automatic recording means for recording association information between the design work procedure and the design information that is offered to the design work procedure or created as the design result in the design work procedure, as a use history for each design information, and a design information use history database that stores and manages the use history. Such a design work support device is said to be able to accumulate the use history of the design information without requiring user effort, and to make it easier to reuse design results.

PCT/International Publication No. WO 2023/218659 discloses a software development support device. The software development support device disclosed in the publication includes a similar business extraction unit configured to calculate, for each of workflows of a plurality of first businesses for which software corresponding to each task has already been developed, a degree of similarity with a workflow of a second business for which software corresponding to each task has not yet been developed, and to extract some of the first businesses from the plurality of first businesses based on the degree of similarity, and a software output unit configured to output software groups corresponding to the workflow of the extracted first businesses. This reduces development cost of software.

### SUMMARY

The present inventors intend to perform a failure mode analysis efficiently.

A failure mode analysis support method proposed herein is a computer-implemented failure mode analysis support method including:
an input process of entering at least one piece of information that is subject to a failure mode analysis; and
a process (sa) of asking a question to a conversational AI so that at least one failure mode that may occur in a product or a manufacturing process is answered based on the information having entered in the input process, to obtain an answer indicating the failure mode that may occur in the product or the manufacturing process.

Such a failure mode analysis support method makes it possible to perform a failure mode analysis efficiently.

### BRIEF DESCRIPTION OF THE DRAWINGS

Fig. 1 is a block diagram of a failure mode analysis support system 10 that embodies a failure mode analysis support method proposed herein.
Fig. 2 illustrates an example of a failure mode analysis format used in the failure mode analysis support method.
Fig. 3 is a flowchart illustrating an example of process (sa).
Fig. 4 is a flowchart illustrating an example of process (sb).

### DETAILED DESCRIPTION

Hereinbelow, embodiments of the technology according to the present disclosure will be described with reference to the drawings. It should be noted, however, that the embodiments disclosed herein are, of course, not intended to limit the invention. The drawings are depicted schematically and do not necessarily accurately depict actual objects. The features and components that exhibit the same effects are designated by the same reference symbols as appropriate, and the description thereof will not be repeated as appropriate.

### Failure Mode Analysis Support System 10

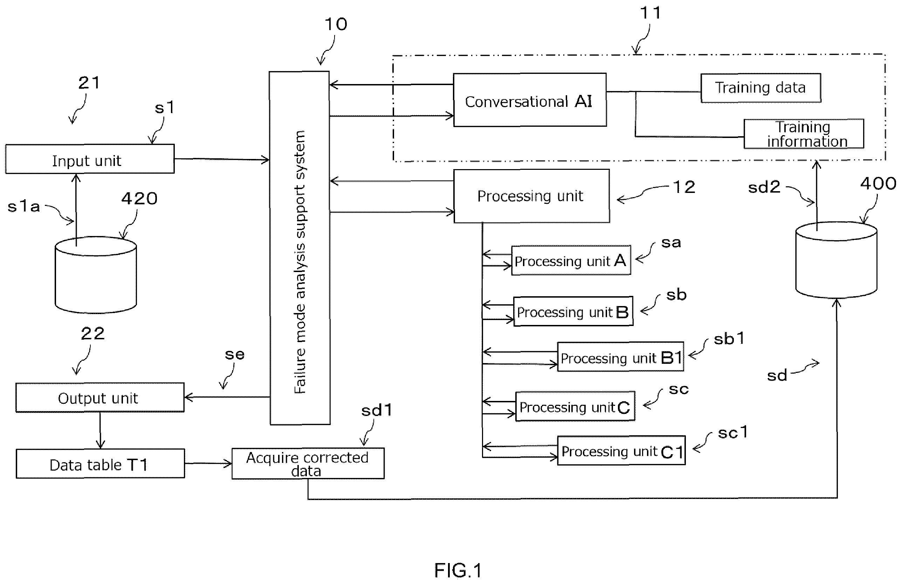

Fig. 1 is a block diagram of a failure mode analysis support system 10 that embodies a failure mode analysis support method proposed herein. Failure mode analysis is a system for analyzing failure modes of a product or a manufacturing process. Failure mode analysis may include an analyzing technique (FMEA) of identifying failure modes that potentially exist in a product or manufacturing process in advance, analyzing their effects, extracting possible causes, and thereafter implementing countermeasures. Herein, FMEA is an abbreviation of Failure Mode and Effects Analysis.

FMEA, one of the failure mode analyses, performs, for example, a step of identifying failure modes that potentially exist in a product or a manufacturing process in advance, a step of investigating and evaluating the effects and the degree of effects when failure modes occur in the product or the manufacturing process, investigation of the causes of the failure (mechanism of the failure), and evaluation of the frequency of occurrence, to consider countermeasures against the current design and management.

For example, if there is a step of "fastening a component with a screw" in the manufacturing process of a product, an event of "poor screw fastening" may be listed as a failure mode that potentially exists in a product or a manufacturing process, in the step of identifying failure modes that potentially exists in a product or a manufacturing process. Then, in the step of analyzing and evaluating the effects, the effects and the degree of effects resulting from the event of "poor screw fastening" on the product or the manufacturing process are considered and analyzed. For example, the effects of the event of "poor screw fastening" may include such an event as "detachment of components". Then, the effects and the degree of effects are evaluated. Furthermore, for the event of "poor screw fastening", the cause, mechanism, and frequency of occurrence of the failure are evaluated, and countermeasures against the current design and management are considered. Examples of the causes and the mechanisms of the failure include problems in components or design, such as "errors in work such as not applying appropriate torque or fastening the screw without fitting it to a proper position", "damage to the screw", and "lack of washer".

For the countermeasures against the current design and management, prevention control and detection control are considered based on the results of consideration on the causes and mechanisms of the failure. The prevention control is a countermeasure that prevents "poor screw fastening" itself. An example of the countermeasure that prevents "poor screw fastening" itself may be "checking by the worker" if the cause is "work error". Alternatively, if the cause is "loosening due to vibration", it is possible to list "design change such as changing to a screw that does not loosen". The detection control is a countermeasure that detects "poor screw fastening". An example of the countermeasure that prevents "poor screw fastening" in manufacturing includes "providing a step of checking loosening of the screw in a post-process" and the like. For the screw fastening failure that later occurs in the product, "performing a periodic inspection" may be an example. Thus, for the prevention control and the detection control, it is desirable to take countermeasures that are effective depending on the cause or mechanism of the failure.

Thus, in FMEA, one of failure mode analyses, from the process step of "fastening a component with a screw", the following are considered sequentially: "poor screw fastening" as a failure mode, "detachment of a component" as its effect, the severity thereof, the cause, mechanism, frequency of occurrence, preventive measure, inspection method of "poor screw fastening", and the like.

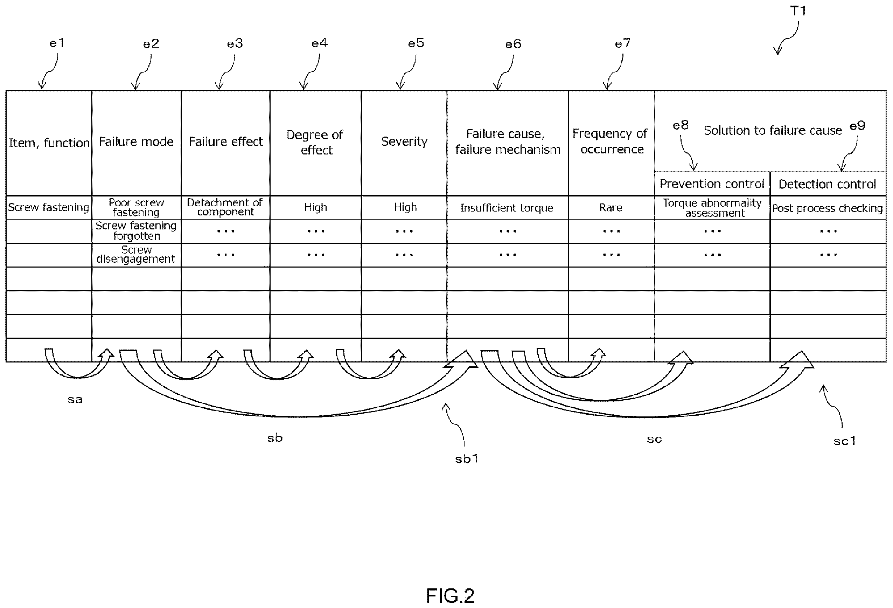

Fig. 2 illustrates an example of a failure mode analysis format used in the failure mode analysis support method. In FMEA, one of failure mode analyses, such sequential consideration is summarized in a table, for example, as shown in Fig. 2. Herein, for the item "screw fastening", FMEA is performed by sequentially filling the items , such as failure mode, effects of failure, degree of effect, failure cause (failure mechanism), frequency of occurrence, prevention control, detection control, and the like, according to the table. Although an example of the failure mode analysis by FMEAis illustrated herein, FMEA may be applied not only to the item "screw fastening" but also to various items for a product or a manufacturing process of the product. With FMEA, problems that may potentially occur in a product or a manufacturing process of a product and their countermeasures are presented in an orderly manner.

The failure mode analysis such as FMEA is used in various situations, such as designing, manufacturing processes, and product evaluations. In designing, design FMEA suitable for product design is used. The design FMEA is aimed at finding potential bugs, product quality risks, and the like during the design stage, to connect it to correction. In a manufacturing process, a process FMEA, in which the concept of FMEA is applied to process control, is used, for example. The process FMEA is mainly aimed at preventing problems that may occur in the manufacturing process in the manufacturing site. The process FMEA is able to extract failure modes in each of the elements "facility", "workers", "material", "method", and "measurement" that constitute the process, to evaluate troubles and the risk of accidents. In product evaluation, functional FMEA is used, which performs a risk assessment of a specific product or system by focusing on the functions that form the constituent elements. In functional FMEA, for a product or a system, the parts that constitute the product or the functions or programs that constitute the system, respectively, may be the subject of the functional FMEA. Note that in FMEA, an appropriate format may be prepared according to the situation in which the failure mode analysis is used. The format of the table used for the failure mode analysis may follow, for example, examples of the FMEA in the past.

For example, the FMEA that is performed for the analysis of a product development process requires much experience and skills, and moreover a large amount of work, because it needs extracting all the failure modes relating to the product and considering the countermeasure plans. In particular, when the product or the manufacturing process is complex, the number of items to be considered accordingly increases, so the work of considering the countermeasure plans also requires more extensive experience and skills. In a failure mode analysis such as FMEA, the results are different depending on the extent of the experience and knowledge of the worker, and the more skilled the worker is, the better analysis the worker tends to be able to perform. Because of these circumstances, the present inventors intend to perform a failure mode analysis such as FMEA efficiently and more easily to obtain consistent and beneficial analysis results quickly regardless of the extent of the experience and knowledge of the worker.

The failure mode analysis support method proposed herein is implemented by a computer. One means of embodying the failure mode analysis support method may be a computer program that is executed by a computer. The failure mode analysis support system 10 may be embodied by a computer system. The computer system may include a memory that stores a computer program and one or more processors capable of executing the computer program stored in the memory.

More specifically, a computer that embodies the failure mode analysis support system 10 may include, for example, an interface (I/F) that receives data or the like from external devices, a central processing unit (CPU) that executes instructions of a program, a ROM that stores the program to be executed by the CPU, a RAM that is used as a working area for deploying the program, and a memory storage device (or a recording medium), such as a memory, that stores the foregoing program and various data. Each of various functions of the failure mode analysis support system 10 may be embodied by a cooperative combination of a predetermined program (software) and a computer (hardware) that executes the predetermined program. Although not shown in the drawings, the failure mode analysis support system 10 may be one in which a plurality of controllers cooperate with each other. The failure mode analysis support system 10 may be implemented by, for example, a cooperative process of a plurality of computers connected via a network. Among the computers, there exists a computer that is configured to execute intelligent processes through machine learning, such as that is called artificial intelligence. The artificial intelligence may be referred to as AI as appropriate.

Herein, the computer program may be stored in, for example, a non-transitory computer readable medium. It is also possible that the program may be supplied to a computer through such a non-transitory computer readable medium. Examples of the non-transitory computer readable medium may include magnetic recording media (such as flexible disks, magnetic tapes, and hard disk drives) and CD-ROMs. In addition, the program may be installed in a computer through a network such as the Internet. The program may be executed by a plurality of processors.

As illustrated in Fig. 1, the failure mode analysis support system 10 includes an input unit 21, an output unit 22, and a processor 12. In this embodiment, the processor 12 includes a processing unit A, a processing unit B, a processing unit B 1, a processing unit C, and a processing unit C1, each of which is a processing unit that performs a required function. The failure mode analysis support system 10 also incorporates a communication function with a conversational AI. In the embodiment shown in Fig. 1, the conversational AI is incorporated in an external system 11. When the conversational AI is incorporated in an external system, the failure mode analysis support system 10 may be configured to be connectable with an API (Application Programming Interface) of the conversational AI. It is also possible that the conversational AI may be incorporated within the failure mode analysis support system 10. Alternatively, the failure mode analysis support system 10 may be provided by a server that is available through a network, such as the Internet. Therein, the API of the conversational AI may be used by the failure mode analysis support system 10.

Herein, the input unit 21 performs various types of input processes s1 of the failure mode analysis support system 10. In the input process (s1), at least one piece of information that is subject to a failure mode analysis may be entered, for example. For example, the information entered in the input process (s1) may be information that is to be entered into the items that are subject to the risk analysis and assessment in a failure mode analysis such as FMEA. In the failure mode analysis such as FMEA, it is considered desirable that the items subject to the risk analysis and assessment should be such information as to be narrowed down to specific causes. For example, when the product uses a screw fastening structure or a welding structure, the words "screw fastening" and "welding", for example, may be items in FMEA.

The information entered in the input process (s1) may be such information that is selected and input by the user that is subject to the risk analysis and assessment in a failure mode analysis such as FMEA. For the process to be executed by a computer, it is possible to allow the user to input required information through a display screen, for example.

The information entered in the input process (s1) includes, for example, at least one of information on the structure of the product, information on the function of the product, and information on the manufacturing process. The information on the structure of the product includes design drawings and part drawings of the product. The information on the function of the product includes specifications and instruction manuals of the product. The manufacturing process includes "processing", "assembly", "inspection", "storage", "shipment", and the like. The information on the manufacturing process may include process sheets containing the work procedure, and the like.

In the case of lithium-ion secondary battery, for example, the information on the structure of the product may include dimensions (sizes), the structure of the positive electrode, the structure of the negative electrode, the composition of the electrolyte solution, the structure of the electrode terminals, the structure of the battery case, and the sealing structure. The information on the function of the product may include electricity storage capacity, operating voltage, energy density, cycle life, and the like. The information on the manufacturing process may include process steps including kneading of active materials, coating of active materials, drying, pressing welding of sheets, inserting into battery cases, welding of battery cases, electrolyte filling, aging, sealing of filling ports, modularization, and the like. Herein, although a lithium-ion secondary battery is illustrated as an example of the product, the products that are subject of the failure mode analysis in the failure mode analysis support method proposed herein are not limited to the lithium-ion secondary battery.

In this case, in the input process (s1), character information extracted by a computer from the text information relating to the structure of the product, the function of the product, and the manufacturing process may be entered. In such an input process (s1), the words and phrases that can be items in the failure mode analysis may be automatically extracted by a computer. For example, a computer (AI (artificial intelligence)) may be used in a process (s1a) (information extraction process) of extracting the words and phrases that can be items in the failure mode analysis. The AI may be trained using the data of FMEA created in the past as the training data so that the words and phrases that can be items in the failure mode analysis can be extracted from various text data concerning the product or manufacturing process. For example, as illustrated in Fig. 1, text information on the structure of the product, the function of the product, and the manufacturing process may be recorded in a predetermined database 420. In the information extraction process (s1a), the words and phrases that can be items in the failure mode analysis may be extracted from various text data on the product or manufacturing process by a pre-trained AI.

Thus, the information entered in the input process (s1) may be such that the words and phrases that can be items in the failure mode analysis are manually input by a human. The input process (s1) may be configured so that candidate keywords are extracted by AI from various text data on the product or manufacturing process. Then, from the extracted keywords, the keywords to be adopted for items of FMEA may be selected manually by a human. In this case, a list of keywords extracted by a machine-learned computer is shown on a display. Then, from the list of keywords shown on the display, the user may select words and phrases that can be items in the failure mode analysis. Thus, the input process (s1) of the failure mode analysis support method may be configured so that the words and phrases that can be items in the failure mode analysis are provided by a pre-trained machine-learned computer as the input process (s1) based on various text data on the product or manufacturing process. Alternatively, the input process (s1) of the failure mode analysis support method may be configured so that items can be entered automatically by a pre-trained machine-learned computer in the failure mode analysis based on various text data on the product or manufacturing process.

Thus, allowing pre-trained AI (artificial intelligence) to be involved in the input process (s1) may prevent necessary items from being omitted from the items to be entered in the table in a predetermined format of FMEA. Moreover, allowing pre-trained AI (artificial intelligence) to be involved in the input process (s1) is able to compensate for the lack of experience and skills of the worker and improve the quality of the failure mode analysis. Furthermore, it is possible to improve the work efficiency of the failure mode analysis.

### Processing Unit A

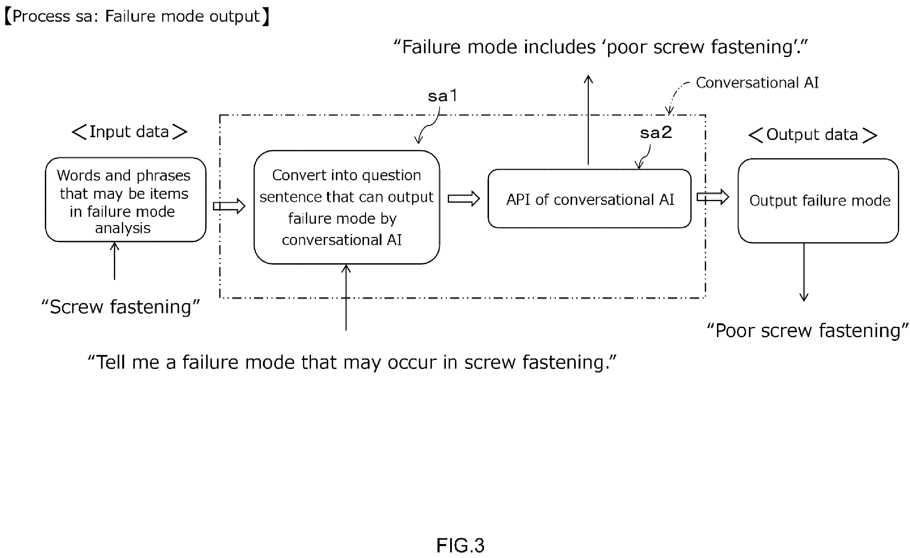

The processing unit A executes a process (sa) of asking a question to a conversational AI so that at least one failure mode that may occur in the product or manufacturing process is answered based on the information entered in the input process (s1), to obtain an answer indicating the failure mode that may occur in the product or manufacturing process. Fig. 3 is a flowchart illustrating an example of process (sa).

### Conversational AI

Herein, the term conversational AI (Conversational Artificial Intelligence) refers to technologies such as chatbots and virtual agents that able to interact with the user. Herein, the conversational AI is implemented by combining natural language processing (NLP) and machine learning so as to answer questions from the user. Herein, for the conversational AI, it is possible to use an API (Application Programming Interface) of a large-scale natural language processing model. For example, it is possible to use a conversational AI service that comprehends the meaning and purposes of what is questioned in sentences (text) and generates an appropriate response thereto. Examples of such a conversational AI service include ChatGPT provided by OpenAI, Inc.

The conversational AI used for the failure mode analysis support method proposed herein may be a pre-trained conversational AI that is trained using, as the training data, data that record keywords obtained from the product information or the information on the manufacturing process in association with failure modes. Such a conversational AI is able to output a failure mode by asking a question so that a failure mode that may occur in the product or the manufacturing process is answered, based on the information entered in the input process.

For example, when the information on the manufacturing process contains "screw fastening", a question is asked in the process (sa) to the conversational AI so that a failure mode that can occur in "screw fastening" is answered, as illustrated in Fig. 3. The conversational AI responds with a failure mode that may occur in "screw fastening". Specifically, the user asks a question "Tell me a failure mode that may occur in "screw fastening"" to the conversational AI. Then, the conversational AI answers "a failure mode that may occur in "screw fastening" includes "poor screw fastening"". Thus, based on the answer from the conversational AI, "poor screw fastening" is output as the failure mode.

### Process (sa)

In the process (sa), as illustrated in Fig. 3, a question sentence to obtain an answer from the conversational AI may be created by the conversational AI (process (sa1)). That is, the process (sa1) is a process of creating a question sentence for obtaining an answer indicating failure mode. In this case, the process (sa1) creates a question sentence to ask a question to the conversational AI based on the information entered in the input process (s1) so as to be answered with at least one failure mode that may occur in the product or the manufacturing process based on the information entered in the input process (s1). Then, the conversational AI may be one that asks the generated question sentence to the conversational AI through the API of the conversational AI, to obtain an answer indicating a failure mode (process (sa2)).

For example, when the information on the manufacturing process contains "screw fastening", a question is asked in the process (sa) to the conversational AI so that a failure mode that may occur in "screw fastening" is answered. The conversational AI responds with a failure mode that may occur in "screw fastening". Specifically, the user asks a question "Tell me a failure mode that may occur in "screw fastening"" to the conversational AI. Then, the conversational AI answers "A failure mode that may occur in "screw fastening" includes "poor screw fastening".". Note that one failure mode is provided herein as an example of the answer in the process (sa), it is also possible that a plurality of failure modes may be provided. When the user asks a question "Tell me 3 failure modes that may occur in "screw fastening"", the conversational AI provides 3 failure modes as the failure modes that may occur in "screw fastening". The conversational AI may answer, for example, "Failure modes that may occur in "screw fastening" include "poor screw fastening", "screw fastening forgotten", and "screw disengagement".".

### Processing Unit B

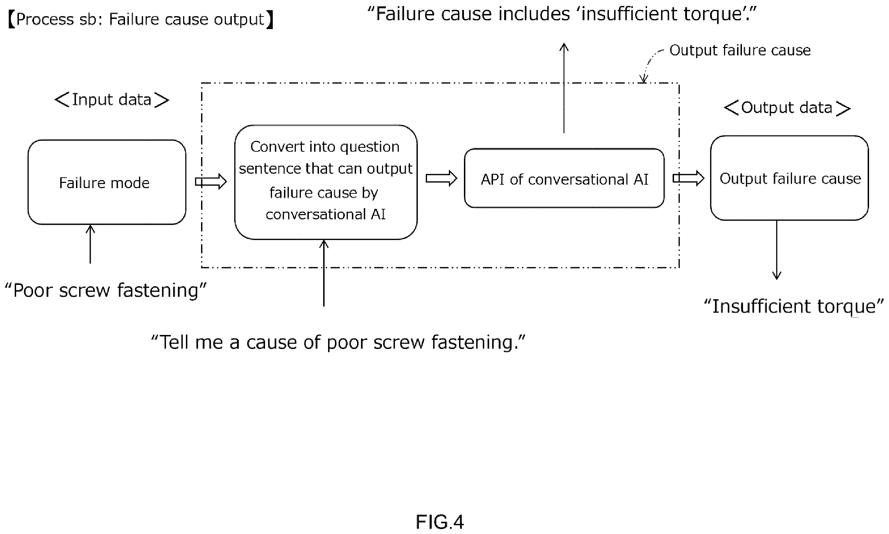

As illustrated in Fig. 1, the processing unit B executes a process (sb) of asking a question, based on the failure mode obtained as the answer in the process (sa), to the conversational AI configured to respond with at least one failure cause, and obtaining an answer indicating the failure cause. Fig. 4 is a flowchart illustrating an example of process (sb).

In the process (sb), the conversational AI may be pre-trained so that a failure cause can be obtained as an answer for a failure mode. An example of the question to the conversational AI may be a question, for example, "Tell me a failure cause about the failure mode obtained as the answer in the process (sa)". In this case, such a question sentence may be created by the conversational AI based on the failure mode obtained as the answer in the process (sa). For example, when the failure mode obtained as the answer in the process (sa) is "poor screw fastening", the conversational AI creates a question sentence "Tell me a cause of poor screw fastening". The conversational AI provides an answer "Causes of poor screw fastening include "insufficient torque"." for such a question sentence. In response to such an answer, the process (sb) outputs "insufficient torque" as the failure cause for the failure mode.

Note that the failure cause for the failure mode may not be limited to only one. Depending on the product, there may be complicated factors combined with each other, a plurality of failure causes may not be narrowed down to one cause. For this reason, in the process (sb), it is possible to ask a question to the conversational AI such that a plurality of causes can be obtained as the answer for a failure mode.

For example, when the failure mode is "poor screw fastening", it is possible to ask the conversational AI a question "List 10 causes of poor screw fastening".

In response, the conversational AI may answer, for example, as follows:
"The following causes are possible for "poor screw fastening":
   1. Proper torque not applied (insufficient torque)
   2. Screw not positioned at proper location
   3. Screw damaged
   4. Dirty screw thread
   5. Insufficient washer
   6. Threadlocker not used sufficiently
   7. Poor fastening due to material issue
   8. Improper screw size
   9. Bent bolt
   10. Appropriate fastening procedure not followed."
Examples herein are merely one example of the answer of the conversational AI.

In this case, it is possible to employ all the answers, but it is also possible that, based on the causes listed by the conversational AI, the user may select likely ones and employ them for FMEA. As described above, the failure mode analysis support method makes it possible to perform a failure mode analysis efficiently because a question can be asked to the conversational AI and the failure mode analysis can be performed based on the answer thereto.

Herein, an example is illustrated that the process (sa) is a prerequisite for performing the process (sb), but the failure mode analysis support method proposed herein is not limited thereto unless specifically stated otherwise. For example, the failure mode analysis support method may include a process of asking a question to a conversational AI so that at least one failure cause is answered for a failure mode of product information or a manufacturing process to obtain an answer indicating a failure cause. In this case, for example, the failure mode of the product information or the manufacturing process may be entered into a computer by the user. It is possible that a question may be asked to the conversational AI so that a failure cause is answered for the entered failure mode, to obtain the failure cause as the answer. In this case, based on the failure mode that has been entered, a question sentence may be created by the conversational AI. It is also possible that the user may enter a question sentence into a computer such that a failure cause can be obtained for a failure mode as the answer.

For example, the failure mode analysis support method may include a process (sb) of asking a question to a conversational AI so that at least one failure cause is answered for a failure mode of product information or a manufacturing process, to obtain an answer indicating the failure cause. Such a process (sb) may allow the user to enter a question sentence for obtaining an answer indicating the failure cause of the failure mode, and allow the question sentence to enter the conversational AI through the API of the conversational AI, to obtain an answer indicating the failure cause of the failure mode. In addition, the question sentence may be created from the failure mode by the conversational AI.

For example, when the failure mode is "breakage failure of resin housing", it is possible to allow the user to directly enter a question such as "List 10 causes of poor screw fastening" into the conversational AI. It is also possible that the process (sb) may be programmed to, when the user enters "breakage failure of resin housing", create a request sentence "List 10 failure causes for "breakage failure of resin housing"" and enter the request sentence into the conversational AI.

In this case, the conversational AI lists 10 failure causes for "breakage failure of resin housing" as follows, for example.
"The following causes are possible for "breakage failure of resin housing":
1. Physical damages due to external impact or dropping
2. Effects of ultraviolet rays or chemical substances due to environmental conditions
3. Appropriate materials not selected
4. Failures or defects in manufacturing processes
5. Appropriate reinforcement not provided
6. Material deterioration due to heat or humidity variations
7. Material alteration due to aging over time
8. Defects or weakness in design
9. Stress due to inappropriate handling
10. Maintenance and management not performed properly"

In addition, for "failure of power not output" in a power supply device, the user asks a question (request) to the conversational AI "List 10 failures of power supply device not output power". The conversational AI lists 10 failure causes for "failure of power supply device not output power", for example, as follows.
"The following causes are possible for "failures of power supply device not output power":
1. Problems with supply of power (for example, plug is not properly inserted, power switch is off, etc.)
2. Failed power supply cable or plug
3. Failure of fuse within the device
4. Broken or damaged power supply cable
5. Failure of power supply unit
6. Deterioration or failure of battery
7. Overheating due to insufficient cooling system
8. Failure of circuits or components within the system
9. Protection circuit activated due to overload
10. Damages to equipment due to overvoltage or surge"

For a sealing structure, the user asks a question (request) to the conversational AI "List 10 causes of sealing failure" to the conversational AI. The conversational AI lists 10 failure causes for "sealing failure" as follows, for example.
"The following causes are possible for "sealing failure":
1. Inappropriate sealing material selected
2. Appropriate sealing process not followed
3. Deterioration of sealing material due to environmental conditions
4. Non-uniform surface condition of sealing surface
5. Sealing under inappropriate temperature or humidity conditions
6. Problem due to hardening or shrinkage of sealing material
7. Failure due to contamination or oil on sealing surface
8. Bubbles sealed during sealing
9. Inappropriate sealing pressure or rate
10. Deterioration due to end-of-life of sealing material"

Thus, the conversational AI allows a plurality of failure causes to be immediately selected for one failure mode through training. The conversational AI is able to provide causal events that are highly relevant to a failure mode based on the trained contents. The conversational AI may be a pre-trained conversational AI that is trained using, as the training data, data that record failure modes and failure causes in association with each other. The conversational AI may be trained with the structure, functions, manufacturing process, and the like of the product that is subject to the failure mode analysis in advance. When the conversational AI is trained with the structure, functions, manufacturing process, and the like of the product that is subject to the failure mode analysis in advance, it is possible to choose more appropriate failure causes for the product that is subject to the failure mode analysis.

In the conversational AI, the specific process of the processing are unknown. When about 10 failure causes are provided by the conversational AI, some of them may include those the user is never able to come up with immediately but appropriate ones. Therefore, it is possible to provide better failure causes than those obtained from the user's experience and knowledge in the failure mode analysis. On the other hand, when, for example, the training is insufficient, the conversational AI may provide answers containing inappropriate ones. For this reason, it is possible to allow the user to select appropriate failure causes from the failure causes provided by the conversational AI. In either case, the failure mode analysis through the conversational AI makes it possible to perform a more excellent failure mode analysis more efficiently. In addition, when the training for the conversational AI advances, it is expected that the selection by the user with experience or knowledge becomes unnecessary. Even when the user is allowed to select appropriate ones from the failure causes provided by the conversational AI, the user does not need to consider from the scratch. This makes it possible to perform an excellent failure mode analysis more efficiently. Moreover, even when there is a shortage of users with experience and knowledge, it is possible to perform an advanced failure mode analysis.

### Processing Unit C

The processing unit C executes a process (sc) of asking a failure cause of product information or the manufacturing process to the conversational AI, to obtain an answer indicating a solution to the failure cause Herein, the conversational AI may be a pre-trained conversational AI that is trained using, as the training data, data that record the correlation between failure causes and solutions to the failure causes. The data that record the correlation between failure causes and solutions to the failure causes include, for example, literature such as technological documents and academic papers that explain past FMEA results, failure causes, and solutions to failure causes.

### Processing Unit B1 and Processing Unit C1

The processing unit B1 executes a process (sb1) of creating a data table summarizing the information on the product or the manufacturing process entered in the input process (s1), the failure mode obtained in the process (sa), and the failure cause obtained in the process (sb) in a table format. Furthermore, the processing unit C1 executes a process (sc1) of creating a data table summarizing the information on the product or the manufacturing process entered in the input process, the failure mode obtained in the process (sa), the failure cause obtained in the process (sb), and the solution to the failure cause obtained in the process (sc) in a table format. Herein, the data table T1 may be created according to a predetermined format, as illustrated in Fig. 2, for example.

In the failure mode analysis support method proposed herein, items that are subject to the failure mode analysis are entered in item column e1, for example, in the data table T1 shown in Fig. 2, based on the information entered in the input process (s1). In the input process (s1), items that are subject to a failure mode analysis may be entered, for example, directly by the user. Alternatively, the subject of the failure mode analysis may be extracted and entered by a computer from the information on the structure of the product, the information on the functions of the product, the information on the manufacturing process, and the like. Alternatively, after the subject of the failure mode analysis is extracted by a computer, the items to be the subject of the failure mode analysis may be selected by the user.

In the failure mode analysis support method proposed herein, after the item column e1 is entered, the data table T1 is filled in sequence by repeating questions to and answers from the conversational AI. Herein, in the process (sa), when the item column e1 is entered, a question is asked to the conversational AI based on the entered item so that a failure mode corresponding to the entered content of the item column e1 is answered, to obtain the failure mode as the answer. Upon receiving the answer from the conversational AI, the failure mode replied by the conversational AI is entered into a failure mode column e2. Moreover, in the process (sb), a question is asked to the conversational AI based on the failure mode so that a failure mechanism is answered, to obtain an answer about a failure cause. Upon receiving the answer from the conversational AI, the failure mechanism replied by the conversational AI is entered into a failure mode column e6. Furthermore, in the process (sc), a question is asked to the conversational AI based on the failure cause so that a solution to the failure cause is answered, based on the solution to the failure cause, to obtain an answer about the solution to the failure cause. Upon receiving the answer from the conversational AI, the solutions to the failure causes that are replied by the conversational AI are entered into columns e8 and e9 for solutions to the failure cause that have been answered by the conversational AI. In the embodiment shown in Fig. 2, the column for the solution to the failure cause includes a control for preventing failures (prevention control e8) and a control for detecting a failure (detection control e9). Respective answers may be obtained by the conversational AI and entered respectively. Although omitted herein, questions may be asked in sequence to the conversational AI also about degree of effects of the failure (e4), severity (e5), and frequency of occurrence (e7), and respective answers may be entered.

### Output Unit 22

As described above, in the embodiment shown in Fig. 2, the phrase "screw fastening" is entered in the item column e1. Thereafter, questions and answers to the conversational AI are repeated, so that each of the columns in the predetermined data table T1 (each of the columns e2 to e9 in the example shown in Fig. 2) is filled in sequence. Thus, in the failure mode analysis support method, questions and answers to the conversational AI are repeated, so that each of the columns in the predetermined data table T1 is filled in sequence. The output unit 22 outputs the predetermined data table T1 for the failure mode analysis in a filled condition, to offer it to the user (se). The output unit 22 may perform a process (se) of transmitting the data table T1 to a predetermined user's terminal, for example. Also, the output unit 22 may show the data table T1 on a display of a user's terminal.

The user may check the data table T1 for failure mode analysis that has been provided in the failure mode analysis support method and correct it as appropriate for use. In this case as well, the user's effort for the failure mode analysis is lessened because the user may check and correct the data table T1 for the failure mode analysis in a completed condition. In addition, when the training of the conversational AI advances, it is expected to improve the accuracy of the data table T1 for the failure mode analysis that is offered in the failure mode analysis support method. The user effort required for the failure mode analysis is significantly reduced.

### Additional Training of Conversational AI

The failure mode analysis support method may further include a process (sd) of updating the conversational AI. Herein, the process (sd) of updating the conversational AI includes a process (sd1) of acquiring corrected data in which the relationship between input information to and output information from the conversational AI is corrected, and a process (sd2) of training the conversational AI using the corrected data as training data. In the process (sd1) of acquiring corrected data, corrected data in which the data table T1 for failure mode analysis is corrected by the user may be recorded in a predetermined database 400. Then, in the process (sd2) of training the conversational AI, the conversational AI may be trained using, as the training data, the corrected data in which the data table T1 for failure mode analysis is corrected by the user. This is expected to improve the accuracy of the data table T1 that is offered in the failure mode analysis support method.

The failure mode analysis support method illustrated herein may be implemented by a computer program that is to be executed by a computer. Also, the failure mode analysis support system 10 may be configured to be a computer system including a memory storing such a computer program, and one or more processors capable of executing the computer program stored in the memory.

Although various descriptions have been provided above,
the failure mode analysis support system 10 may be configured to cause at least one computer to execute:
an input process (s1) of entering information that is extracted about at least one of structure of a product, functions of the product, and steps of the manufacturing process;
processes (sa to sb) of asking a question to the conversational AI for each entered information to obtain an answer indicating at least one failure mode (that may occur in the product or the manufacturing process), and asking a question to the conversational AI for each failure mode to obtain an answer indicating at least one failure cause; and
a process (sb1) of creating a data table T1 (see Fig.2) summarizing the extracted information, the failure mode replied for each of the extracted information, and the failure cause replied for each of the extracted information, in a table format.

The failure mode analysis support system 10 may also be configured to execute, by at least one computer:
processes (sa to sc) of asking a question for each failure cause to the conversational AI and obtaining an answer indicating the solution thereto.
In this case, the process (sc1) of creating a data table T1 may be configured to create a data table T1 summarizing the information that is extracted about the structure and functions of the product or the steps of the manufacturing process, the failure mode replied for each extracted information, the failure cause replied for each failure mode, and the solution replied for each failure cause in a table format.

The failure mode analysis support system 10 is configured to further execute, by at least one computer, an information extraction process (s1a) of extracting information about structure of the product, functions of the product, and steps of the manufacturing process, from a database 420 recording data about the structure of the product, the functions of the product, and the steps of the manufacturing process. The input process (s1) may be configured to enter the information extracted in such an information extraction process (s1a).

Various embodiments of the invention have been described hereinabove according to the present disclosure. Unless specifically stated otherwise, the embodiments described herein do not limit the scope of the present invention. It should be noted that various other modifications and alterations may be possible in the embodiments of the invention disclosed herein. In addition, the features, structures, or steps described herein may be omitted as appropriate, or may be combined in any suitable combinations, unless specifically stated otherwise.

As has been described above, the present description contains the disclosure as set forth in the following items.

### Item 1:

A computer-implemented failure mode analysis support method including:
an input process of entering at least one piece of information that is subject to a failure mode analysis; and
a process (sa) of asking a question to a conversational AI so that at least one failure mode that may occur in a product or a manufacturing process is answered based on the information entered in the input process, to obtain an answer indicating a failure mode that may occur in the product or the manufacturing process.

### Item 2:

The failure mode analysis support method according to item 1, wherein the information entered in the input process includes at least one item of information among information on a structure of the product, information on functions of the product, and information on a manufacturing process.

### Item 3:

The failure mode analysis support method according to item 2, wherein the information entered in the input process includes character information extracted by a computer from text information relating to the structure of the product, the functions of the product, and the manufacturing process.

### Item 4:

The failure mode analysis support method according to any one of items 1 to 3, wherein the conversational AI is a pre-trained conversational AI that is trained using, as training data, data recording keywords obtained from information on the product or information on the manufacturing process in association with failure modes.

### Item 5:

A computer-implemented failure mode analysis support method including:
a process (sb) of asking a question to a conversational AI so that at least one failure cause is answered for a failure mode of product information or a manufacturing process, to obtain an answer indicating the failure cause.

### Item 6:

The failure mode analysis support method according to any one of items 1 to 4, further including a process (sb) of asking a question to the conversational AI configured to respond with at least one failure cause based on the failure mode obtained as the answer in the process (sa), to obtain an answer indicating the failure cause.

### Item 7:

The failure mode analysis support method according to item 6, wherein the conversational AI is a pre-trained conversational AI that is trained using, as training data, data recording failure modes and failure causes in association with each other.

### Item 8:

The failure mode analysis support method according to item 6, further including a process (sb1) of creating a data table summarizing the information on the product or the manufacturing process entered in the input process, the failure mode obtained in the process (sa), and the failure cause obtained in the process (sb) in a table format.

### Item 9:

A computer-implemented failure mode analysis support method including:
a process (sc) of asking a failure cause of product information or a manufacturing process to a conversational AI, to obtain an answer indicating a solution to the failure cause.

### Item 10:

The failure mode analysis support method according to any one of items 6 through 8, further including a process (sc) of asking the failure cause obtained as the answer in the process (sb) to the conversational AI, to obtain an answer indicating a solution to the failure cause.

### Item 11:

The failure mode analysis support method according to item 10, wherein the conversational AI is a pre-trained conversational AI that is trained using, as training data, data recording a correlation between failure causes and solutions to the failure causes.

### Item 12:

The failure mode analysis support method according to item 10, further including:
a process (sc1) of creating a data table summarizing the information on the product or the manufacturing process entered in the input process, the failure mode obtained in the process (sa), the failure cause obtained in the process (sb), and the solution to the failure cause obtained in the process (sc), in a table format.

### Item 13:

The failure mode analysis support method according to any one of items 1 through 12, further including:
a process (sd) of updating the conversational AI; wherein
the process (sd) of updating the conversational AI includes:
   a process (sd1) of acquiring corrected data in which a relationship between input information to and output information from the conversational AI; and
   a process (sd2) of training the conversational AI using the corrected data as training data.

### Item 14:

A computer program causing a computer to execute the method according to any one of items 1 through 13.

### Item 15:

A computer system including;
a memory storing the computer program according to item 14; and
one or more processors capable of executing the computer program stored in the memory.

### REFERENCE SIGNS LIST

10 Failure mode analysis support system
11 External system
12 Processing unit
21 Input unit
22 Output unit
400 Database
420 Database
T1 Data table
s1 Input process
s1a Information extraction process
sa Process of asking a question to the conversational AI to obtain an answer indicating a failure mode
sa1 Process of creating a question sentence for obtaining an answer indicating a failure cause
sa2 Process of providing the generated question sentence to the conversational AI to obtain an answer indicating a failure mode
sb Process of asking a question to the conversational AI to obtain an answer indicating a failure cause
sc Process of asking a failure cause to a conversational AI, to obtain an answer indicating a solution to the failure cause
sd Process of updating the conversational AI
sd1 Process of acquiring corrected data
sd2 Process of training the conversational AI using the corrected data as training data
se Process of transmitting data table T1 to a predetermined user terminal

## Claims

1. A computer-implemented failure mode analysis support method comprising:
an input process of entering at least one piece of information that is subject to a failure mode analysis; and
a process (sa) of asking a question to a conversational AI so that at least one failure mode that may occur in a product or a manufacturing process is answered based on the information entered in the input process, to obtain an answer indicating a failure mode that may occur in the product or the manufacturing process.

2. The failure mode analysis support method according to claim 1, wherein the information entered in the input process includes at least one item of information among information on a structure of the product, information on functions of the product, and information on a manufacturing process.

3. The failure mode analysis support method according to claim 2, wherein the information entered in the input process includes character information extracted by a computer from text information relating to the structure of the product, the functions of the product, and the manufacturing process.

4. The failure mode analysis support method according to claim 1, wherein the conversational AI is a pre-trained conversational AI that is trained using, as training data, data recording keywords obtained from information on the product or information on the manufacturing process in association with failure modes.

5. A computer-implemented failure mode analysis support method comprising:
a process (sb) of asking a question to a conversational AI so that at least one failure cause is answered for a failure mode of product information or a manufacturing process, to obtain an answer indicating the failure cause.

6. The failure mode analysis support method according to claim 1, further comprising:
a process (sb) of asking a question to the conversational AI configured to respond with at least one failure cause based on the failure mode obtained as the answer in the process (sa), to obtain an answer indicating the failure cause.

7. The failure mode analysis support method according to claim 6, wherein the conversational AI is a pre-trained conversational AI that is trained using, as training data, data recording failure modes and failure causes in association with each other.

8. The failure mode analysis support method according to claim 6, further comprising a process (sb1) of creating a data table summarizing the information on the product or the manufacturing process entered in the input process, the failure mode obtained in the process (sa), and the failure cause obtained in the process (sb) in a table format.

9. A computer-implemented failure mode analysis support method comprising:
a process (sc) of asking a failure cause of product information or a manufacturing process to a conversational AI, to obtain an answer indicating a solution to the failure cause.

10. The failure mode analysis support method according to claim 6, further comprising a process (sc) of asking the failure cause obtained as the answer in the process (sb) to the conversational AI, to obtain an answer indicating a solution to the failure cause.

11. The failure mode analysis support method according to claim 10, wherein the conversational AI is a pre-trained conversational AI that is trained using, as training data, data recording a correlation between failure causes and solutions to the failure causes.

12. The failure mode analysis support method according to claim 10, further comprising:
a process (sc1) of creating a data table summarizing the information on the product or the manufacturing process entered in the input process, the failure mode obtained in the process (sa), the failure cause obtained in the process (sb), and the solution to the failure cause obtained in the process (sc), in a table format.

13. The failure mode analysis support method according to any one of claims 1 through 12, further comprising:
a process (sd) of updating the conversational AI; wherein
the process (sd) of updating the conversational AI includes:
a process (sd1) of acquiring corrected data in which a relationship between input information to and output information from the conversational AI; and
a process (sd2) of training the conversational AI using the corrected data as training data.

14. A computer program causing a computer to execute the method according to any one of claims 1 through 13.

15. A computer system including a memory, a processor, and a computer program stored in the memory, the computer system implementing the steps of the method according to any one of claims 1 to 13 by executing the computer program.
